# EUROPÄISCHE PATENTSCHRIFT

(11) **EP 0 637 107 B1**
(45) Veröffentlichungstag und Bekanntmachung des Hinweises auf die Patenterteilung: **13.11.1996**
(21) Anmeldenummer: 94111101.5
(22) Anmeldetag: 16.07.1994
(51) Int. Cl.: H01S 3/06, H04B 10/17

(54) **Faseroptischer Verstärker als Wellenlängenumsetzer**
Optical fibre amplifier as wavelength converter
Amplificateur à fibre optique utilisé comme convertisseur de longueur d'onde

(30) Priorität: 26.07.1993 DE 4324984
(43) Veröffentlichungstag der Anmeldung: 01.02.1995
(73) Patentinhaber: Alcatel SEL Aktiengesellschaft, D-70435 Stuttgart (DE); ALCATEL N.V., NL-1077 XX Amsterdam (NL)
(72) Erfinder: Heidemann, Dr. Rolf, D-71732 Tamm (DE); Bülow, Dr. Henning, D-71638 Ludwigsburg (DE); Pfeiffer, Dr. Thomas, D-70569 Stuttgart (DE)
(74) Vertreter: Kugler, Hermann, Dipl.-Phys.

(56) Entgegenhaltungen:
- EP-A- 0 514 686
- US-A- 4 786 140
- ELECTRONICS LETTERS., Bd.27, Nr.1, 3. Januar 1991, STEVENAGE GB Seiten 89 - 91, XP000202549 M. SUYAMA ET AL. 'Bidirectional transmission scheme using intensity modulation of 1.48 mum pump laser diode for Erbium-doped fibre amplifier'

## Beschreibung

Die Erfindung betrifft ein optisches System mit einem faseroptischen Verstärker nach dem Oberbegriff des Anspruchs 1.

Außerdem betrifft die Erfindung die Verwendung eines faseroptischen Verstärkers entsprechend dem Oberbegriff des Anspruchs 6.

Unter einem "optischen System" wird im folgenden eine Kombination von verschiedenen optischen Vorrichtungen wie z.B. Lasern, Lichtwellenleitern und faseroptischen Verstärkern verstanden, die miteinander zusammenwirken, wobei sie räumlich weit voneinander entfernt angeordnet sein können.

Üblicherweise werden faseroptische Verstärker dazu verwendet, um das in einem Lichtwellenleiter geführte optische Signal zu verstärken. Optische Systeme der genannten Art sind bekannt. Somit ist auch die Verwendung der darin enthaltenen faseroptischen Verstärker bekannt.

Aus EP-A2-0 514 686 ist ein optisches System mit einem faseroptischen Verstärker bekannt, das eine weitere Verwendungsmöglichkeit eines faseroptischen Verstärkers aufzeigt (Fig. 4). Der darin enthaltene faseroptische Verstärker ist in seiner üblichen Darstellungsweise mit einem dotierten Lichtwellenleiterstück und einer Pumplicht-Quelle gezeigt. Diesem wird moduliertes Licht, das eine Wellenlänge von 850 nm hat, von mindestens einem Sendelaser zugeführt. Außerdem wird ihm unmoduliertes Licht zugeführt, das im faseroptischen Verstärker verstärkbar ist. Dieses Licht hat eine Wellenlänge von 1550 nm. Aus dem faseroptischen Verstärker tritt moduliertes Licht aus, das eine Wellenlänge von 1550 nm hat.

Die Wellenlänge des zu übertragenden Lichts ist in diesem System auf 1550 nm festgelegt, da bei dieser Wellenlänge die Lichtwellenleiter ein Dämpfungsminimum haben. Die Verwendung von Licht dieser Wellenlänge, die hinsichtlich der Dämpfung die optimale Wellenlänge darstellt, verursacht andererseits einen erhöhten Aufwand auf der Sende- und Empfangsseite; es müssen spezielle Sendelaser und Photodioden verwendet werden.

Bei dem bekannten System ist das Problem, spezielle Sendelaser verwenden zu müssen, dadurch gelöst, daß ein preisgünstiger Laser, der Licht einer Wellenlänge von 850 nm aussendet, anstelle eines teueren Lasers, der Licht einer Wellenlänge von 1550 nm aussendet, als Sendelaser verwendet und das Signallicht der Wellenlänge von 850 nm in Signallicht der Wellenlänge 1550 nm umgesetzt wird.

Eine Möglichkeit, die Verwendung von teuren Photodioden, die zum Empfang von Licht einer Wellenlänge von 1550 nm geeignet sind, zu umgehen, ist nicht angegeben.

Eine Aufgabe der Erfindung ist, ein System anzugeben, bei dem die Verwendung von günstigen Photodioden, z.B. Silizium-Dioden, möglich ist. Dies ist wie in Anspruch 1 angegeben gelöst.

Eine weitere Aufgabe der Erfindung ist anzugeben, wie ein faseroptischer Verstärker als Wellenlängenumsetzer verwendet werden kann. Diese wird wie in Anspruch 6 angegeben gelöst.

Ausgestaltungen der Erfindung ergeben sich aus den Unteransprüchen.

Vorteilhaft an der Erfindung ist, daß die Wellenlängenumsetzung möglich ist, ohne eine aufwendige Veränderung am bekannten optischen System vornehmen zu müssen. Es ist lediglich auf der Empfangsseite ein Optisch-Elektrisch Wandler zu verwenden, der zum Empfang einer anderen Wellenlänge geeignet ist, und der im Vergleich zu einem im Stand der Technik verwendeten billiger ist. Ein weiterer Vorteil der Erfindung ist, daß die Wellenlängenumsetzung auch dann möglich ist, wenn der faseroptische Verstärker in der Sättigung ist. Es müssen keine Maßnahmen getroffen werden, um ein Übersteuern zu verhindern.

Die Erfindung wird nun anhand der Figuren näher erläutert.

Es zeigen:
- Fig. 1: ein erstes Ausführungsbeispiel des neuen Systems,
- Fig. 2: ein Diagramm, in dem der Verlauf der optischen Leistung des Pump- und Signallichts in dem dotierten Lichtwellenleiterstück in Abhängigkeit der Länge des Lichtwellenleiterstücks dargestellt ist,
- Fig. 3: ein zweites Ausführungsbeispiel des neuen Systems.

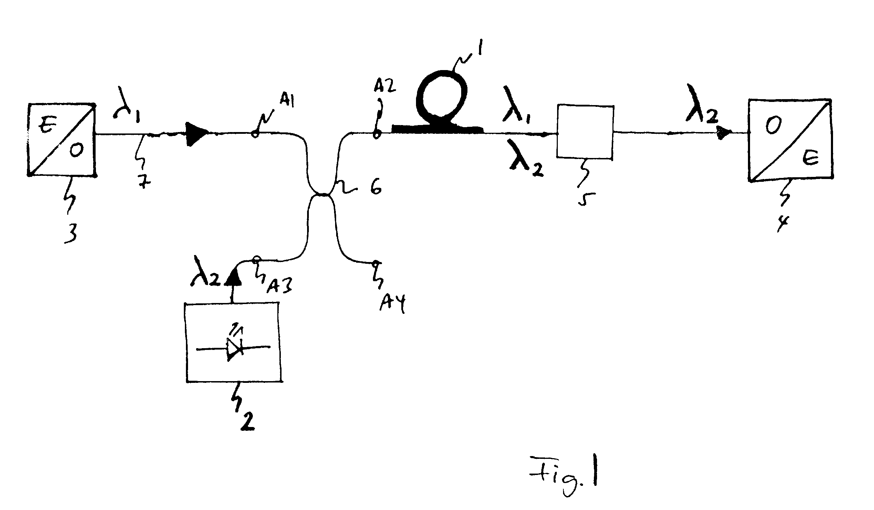

Die Fig. 1 zeigt ein erstes Ausführungsbeispiel eines vereinfachten optischen Systems mit den für die Erfindung relevanten Bestandteilen. Es hat einen sendeseitigen Elektrisch-Optisch Wandler 3, der z.B. ein Laser ist und Signallicht, d.h. mit einer Nachricht moduliertes Licht einer Wellenlänge λ₁ aussendet, und einen empfangsseitigen Optisch-Elektrisch Wandler 4, der eine Photodiode enthält. Außerdem hat es einen faseroptischen Verstärker, der im wesentlichen aus einem dotierten Lichtwellenleiterstück 1, einem Koppler 6, der vorzugsweise wellenselektiv ist, und einer Pumplicht-Quelle 2, die Pumplicht mit einer Wellenlänge λ₂ aussendet, besteht. Der Koppler hat vier Anschlüsse A1 bis A4. Der erste Anschluß A1 des Kopplers 6 ist über einen Lichtwellenleiter 7 mit dem Elektrisch-Optisch Wandler 3 verbunden. Der zweite Anschluß A2 des Kopplers 6 ist mit dem dotierten Lichtwellenleiterstück 1 verbunden. Der dritte Anschluß A3 des Kopplers 6 ist mit der Pumplicht-Quelle 2 verbunden. Ein optisches Filter 5 befindet sich in der Lichtwellenleiterstrecke, die das Lichtwellenleiterstück 1 und den empfangsseitigen Optisch-Elektrisch Wandler 4 verbindet.

Zur Vereinfachung wird im folgenden der Begriff "Licht" für jede optische Strahlung verwendet, auch wenn sie nicht sichtbar ist.

Das Lichtwellenleiterstück 1 ist mit einem Seltenerd-Element, z.B. mit Erbium-Ionen, dotiert. Das vom Elektrisch-Optisch Wandler 3 emittierte Signallicht mit der Wellenlänge λ₁, wird über die Anschlüsse A1 und A2 des Kopplers 6 dem dotierten Lichtwellenleiterstück 1 zugeführt. Desweiteren wird dem dotierten Lichtwellenleiterstück 1 über die Anschlüsse A3 und A2 des Kopplers 6 Pumplicht der Wellenlänge λ₂ zugeführt. Durch dieses Pumplicht werden die Erbium-Ionen von einem energetischen Grundzustand in einen angeregten metastabilen Zustand überführt, von dem aus sie, entweder durch spontane oder stimulierte Emission, wieder in den Grundzustand übergehen. Die stimulierte Emission wird durch das Lichtwellenleiterstück 1 durchlaufendes Signallicht mit der Wellenlänge λ₁ angeregt. Ist die optische Leistung des Signallichts groß, wird ein Großteil der angeregten Erbium-Ionen zur stimulierten Emission angeregt; es sind mehr Erbium-Ionen im Grundzustand als wenn kein oder wenig Signallicht zugeführt wird. In diesem Fall ist die Absorption des Pumplichts groß und am Ende des Lichtwellenleiterstücks 1 tritt wenig Pumplicht aus. Dieses Pumplicht wird im folgenden als nicht absorbiertes Pumplicht bezeichnet.

Das Signallicht und das Pumplicht werden einem Ende des Lichtwellenleiterstücks 1 zugeführt; das Pumplicht breitet sich demnach in dem Lichtwellenleiterstück 1 in Richtung des Signallichts aus.

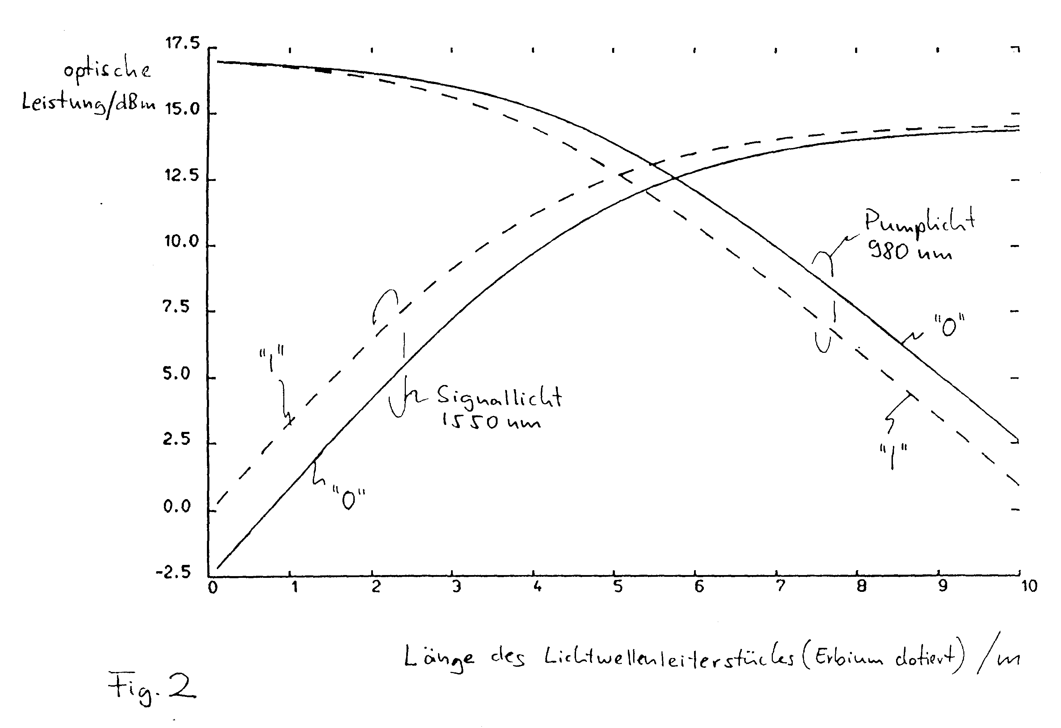

Fig. 2 zeigt ein Diagramm, in dem die Abhängigkeit der optischen Leistung des Pump- und Signallichts im Lichtwellenleiterstück von der Länge des Lichtwellenleiterstücks, das mit Erbium-Ionen dotiert ist, dargestellt ist.

Die Beschreibung des Diagramms erfolgt für ein optisches System, das ein Digitalsignal mit den logischen Zuständen "0" und "1" überträgt. Sie ist aber auch für ein Analogsignal gültig.

Es ist der Verlauf der optischen Leistung des Signallichts für eine logische "0" (durchgezogene Linie) und für eine logische "1" (gestrichelte Linie) dargestellt. Die optische Leistung, die einer logischen "1" entspricht, ist im ganzen Verlauf größer als die, die einer logischen "0" entspricht. Das Signallicht hat hier eine Wellenlänge von 1550 nm und das Pumplicht hat eine Wellenlänge von 980 nm.

Die Angabe der Wellenlänge ist hier so zu verstehen, daß, obwohl ein exakter Wert angegeben ist, auch eine Streuung um diesen Wert möglich ist. Diese Streuungen können z.B. herstellungsbedingt sein.

Man erkennt, daß die optische Leistung des Signallichts mit zunehmender Länge zunimmt, was einer Verstärkung gleichkommt, bis sie ab einer bestimmten Länge einen Maximalwert erreicht, d.h. der Verstärker in eine Sättigung übergeht. Die optische Leistung bei Sättigung beträgt in diesem Beispiel ca. 15 dBm, die etwa bei einer Länge von 7 m erreicht wird.

Desweiteren ist der Verlauf der optischen Leistung des Pumplichts, das kontinuierlich zugeführt wird, in dem Lichtwellenleiterstück dargestellt: Die durchgezogene Linie zeigt den Verlauf, wenn das Signallicht einer logischen "0" entspricht und die gestrichelte Linie zeigt den Verlauf, wenn das Signallicht einer logischen "1" entspricht.

Die Absorption des dem Lichtwellenleiterstück 1 zugeführten Pumplichts ist proportional der Anzahl der Erbium-Ionen, die sich im energetischen Grundzustand befinden. Die Erfindung nutzt die Tatsache aus, daß die Absorption des zugeführten Pumplichts u.a. von der optischen Leistung des Signallichts abhängt. Eine erhöhte Signallichtleistung läßt durch stimulierte Emission eine größere Anzahl von Erbium Elektronen vom angeregten metastabilen Zustand in den Grundzustand übergehen; es wird somit mehr Pumplicht absorbiert. Eine Änderung der optischen Leistung des Signallichts bewirkt demnach eine Änderung der Absorption des Pumplichts. Dadurch überträgt sich die Information, die im Signallicht mit der Wellenlänge λ₁ steckt, auf das nicht absorbierte Pumplicht mit der Wellenlänge λ₂. Auch dann, wenn die optische Leistung des Signallichts so groß ist, daß der Verstärker in die Sättigung übergeht, ändert sich die Absorption des Pumplichts, wenn das Signallicht sich zwischen den logischen Zuständen "0" und "1" ändert. Von Vorteil ist, daß somit keine Maßnahmen ergriffen werden müssen, um die optische Leistung des Signallichts zu begrenzen.

Aus dem Lichtwellenleiterstück 1 tritt demnach Signallicht mit der Wellenlänge λ₁ und nicht absorbiertes Pumplicht mit der Wellenlänge λ₂ aus. Dieses nicht absorbierte Pumplicht stellt das Signallicht für die weiterführende Übertragung dar. Der Optisch-Elektrisch Wandler 4 auf der Empfangsseite ist demnach so auszulegen, daß er für die Wellenlänge λ₂ empfindlich ist. Dies kann z.B. dadurch erfolgen, daß eine preisgünstige Silizium-Photodiode verwendet wird, die bis zu einer Wellenlänge von ca. 1100 nm empfindlich ist. Diese Silizium-Photodiode ist für die ebenfalls empfangene Wellenlänge λ₁ nicht empfindlich, so daß ein besonderes Filter für diese Wellenlänge λ₁ nicht notwendig ist. Bei Verwendung anderer Photodioden kann das Signallicht mit der Wellenlänge λ₁ durch ein optisches Filter 5 an einer Ausbreitung gehindert werden. Das Signallicht mit der Wellenlänge λ₁ hat beispielsweise eine Wellenlänge von 1550 nm. Die Wellenlänge λ₂ des Pumplichts beträgt z.B. 980 nm. Die Wellenlänge des Pumplichts kann auch 800 nm oder 514 nm betragen.

Das Lichtwellenleiterstück 1 kann auch mit anderen Ionen dotiert sein. In diesem Fall muß die verstärkbare Signallichtwellenlänge und die notwendige Pumplichtwellenlänge λ₂ dem Dotierelement angepaßt werden. Eine Alternative zu Erbium ist beispielsweise Neodym. Dann beträgt die Wellenlänge λ₁ des Signallichts, das dem faseroptischen Verstärker zugeführt wird, 1300 nm und die Wellenlänge des Pumplichts λ₂ beträgt 850 nm.

Desweiteren ist es möglich, mit Praseodym dotierte Fluoridfasern zu verwenden. Dann liegt die Wellenlänge λ₁ des verstärkbaren Signallichts ebenfalls bei 1300 nm und die Wellenlänge λ₂ des Pumplichts im Bereich von ca. 980 nm bis ca. 1030 nm.

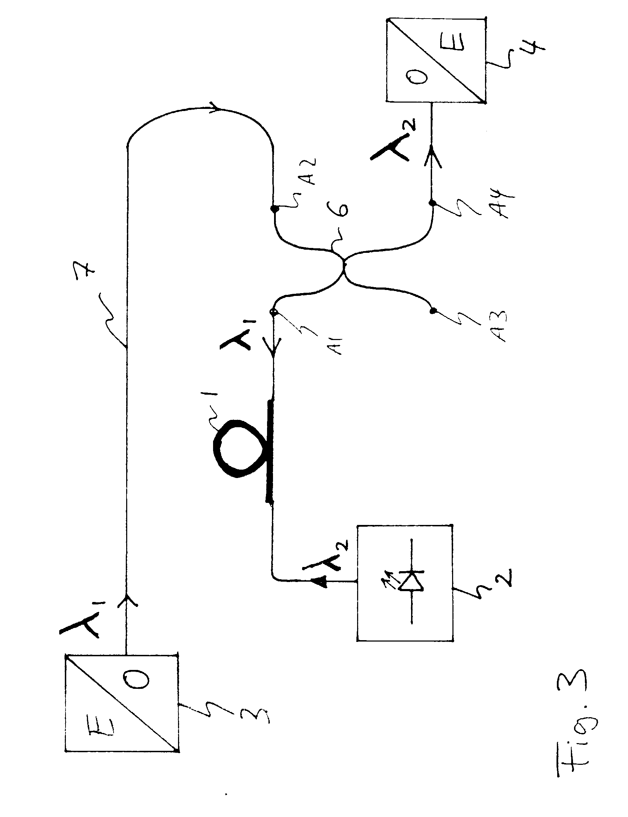

In Fig. 3 ist ein zweites Ausführungsbeispiel eines optischen Systems gezeigt. Für Bestandteile, die die gleiche Funktion wie in dem in Fig. 1 gezeigten System haben, werden die gleichen Bezugszeichen verwendet, weshalb auf deren Aufzählung verzichtet wird. Die Bestandteile sind hier jedoch anders miteinander verbunden. Ein Unterschied zu dem ersten Ausführungsbeispiel besteht darin, daß das Pumplicht und das Signallicht nicht dem gleichen Ende des Lichtwellenleiterstücks 1 zugeführt werden; das Pumplicht breitet sich demnach in dem Lichtwellenleiterstück 1 entgegen der Richtung des Signallichts aus.

Das Signallicht wird einem Ende des Lichtwellenleiterstücks 1 über die beiden Anschlüsse A2, A1 des Kopplers 6 zugeführt. Das Pumplicht wird dem anderen Ende des Lichtwellenleiterstücks 1 zugeführt.

Der Optisch-Elektrisch Wandler 4 ist mit dem vierten Anschluß A4 des Kopplers 6 verbunden, an dem das nicht absorbierte Pumplicht austritt. In diesem Beispiel ist kein optisches Filter 5 notwendig, da an dem Anschluß A4 des wellenlängenselektiven Kopplers 6 nur nicht absorbiertes Pumplicht austritt.

Die Absorptionsvorgänge in dem Lichtwellenleiterstück 1 entsprechen denen, die bereits in Zusammenhang mit Fig. 1 und Fig. 2 erläutert wurden.

In diesem optischen System wirkt der faseroptische Verstärker als Wellenlängenumsetzer, der zu übertragendes Signallicht einer ersten Wellenlänge λ₁ in ein Signallicht einer zweiten Wellenlänge λ₂ umsetzt. Seine charakteristische Eigenschaft, ein Signal zu verstärken, wird in diesem optischen System nicht verwendet. Das Signallicht mit der Wellenlänge λ₁ kann allgemein auch ein kontinuierliches Steuerlicht sein.

An Stelle des Optisch-Elektrisch Wandlers 4, nach dem eine Weiterverarbeitung eines elektrischen Signals erfolgt, ist auch eine Vorrichtung möglich, in der die Weiterverarbeitung oder Weiterleitung des optischen Signals erfolgt. Die Vorrichtung kann auch vor dem Optisch-Elektrisch Wandler 4 angeordnet sein. Eine solche Vorrichtung kann z.B. in Form "Integrierter Optik" vorliegen. Auch eine optische Vorrichtung zum Umsetzen des Signallichts der Wellenlänge λ₂ in Signallicht einer dritten Wellenlänge kann verwendet werden. Allgemein ist die optische Vorrichtung so eingestellt, daß für sie Licht der zweiten Wellenlänge λ₂ Signallicht ist.

## Patentansprüche

1. Optisches System mit einem faseroptischen Verstärker, der ein mit einem Seltenerd-Element dotiertes Lichtwellenleiterstück (1) und eine Pumplicht-Quelle (2), die Pumplicht emittiert, hat, bei dem der faseroptische Verstärker zu übertragendes Signallicht einer ersten Wellenlänge (λ₁) in Signallicht einer zweiten Wellenlänge (λ₂) umsetzt, und mit einem Optisch-Elektrisch Wandler (4) zum Empfang des Signallichts der zweiten Wellenlänge (λ₂),
**dadurch gekennzeichnet,** daß das Signallicht der zweiten Wellenlänge (λ₂) das in dem Lichtwellenleiterstück (1) nicht absorbierte Pumplicht ist.

2. Optisches System nach Anspruch 1,
dadurch gekennzeichnet, daß bezogen auf die Ausbreitungsrichtung des Signallichts nach dem Lichtwellenleiterstück (1) ein optisches Filter (5) vorhanden ist, das Signallicht der ersten Wellenlänge (λ₁) sperrt.

3. Optisches System nach Anspruch 1,
bei dem das Lichtwellenleiterstück (1) mit Erbium-Ionen dotiert ist und die erste Wellenlänge (λ₁) im Bereich um 1550 nm liegt und die zweite Wellenlänge ca. 800 nm, ca. 980 nm oder ca. 514 nm beträgt.

4. Optisches System nach Anspruch 1,
dadurch gekennzeichnet, daß das Lichtwellenleiterstück (1) mit Neodym-Ionen dotiert ist und die erste Wellenlänge (λ₁) im Bereich um 1300 nm liegt und die zweite Wellenlänge (λ₂) ca. 850 nm beträgt.

5. Optisches System nach Anspruch 1,
dadurch gekennzeichnet, daß das Lichtwellenleiterstück (1) mit Praseodym-Ionen dotiert ist und die erste Wellenlänge (λ₁) im Bereich um 1300 nm liegt und die zweite Wellenlänge (λ₂) im Bereich von ca. 980 nm bis ca. 1030 nm liegt.

6. Verwendung eines faseroptischen Verstärkers, der ein mit einem Seltenerd-Element dotiertes Lichtwellenleiterstück (1) und eine Pumplicht-Quelle (2), die Pumplicht emittiert, hat, als Wellenlängenumsetzer, der zu übertragendes Signallicht einer ersten Wellenlänge (λ₁) in Signallicht einer zweiten Wellenlänge (λ₂) umsetzt,
**dadurch gekennzeichnet**, daß das Signallicht der zweiten Wellenlänge (λ₂) das in dem Lichtwellenleiterstück (1) nicht absorbierte Pumplicht ist.

7. Verwendung eines faseroptischen Verstärkers nach Anspruch 6,
dadurch gekennzeichnet, daß, bezogen auf die Ausbreitungsrichtung, nach dem Lichtwellenleiterstück (1) in den Ausbreitungsweg des Signallichts ein optisches Filter eingefügt wird, das Signallicht der ersten Wellenlänge (λ₁) sperrt.

8. Verwendung eines faseroptischen Verstärkers nach Anspruch 6,
bei der das Lichtwellenleiterstück (1) mit Erbium-Ionen dotiert ist und die erste Wellenlänge (λ₁) im Bereich um 1550 nm liegt und die zweite Wellenlänge (λ₂) ca. 800 nm, ca. 980 nm oder ca. 514 nm beträgt.

9. Verwendung eines faseroptischen Verstärkers nach Anspruch 6,
dadurch gekennzeichnet, daß das Lichtwellenleiterstück mit Neodym-Ionen dotiert ist und die erste Wellenlänge (λ₁) im Bereich um 1300 nm liegt und die zweite Wellenlänge (λ₂) ca. 850 nm beträgt.

10. Verwendung eines faseroptischen Verstärkers nach Anspruch 6,
dadurch gekennzeichnet, daß das Lichtwellenleiterstück (1) mit Praseodym-Ionen dotiert ist und die erste Wellenlänge (λ₁) im Bereich um 1300 nm liegt und die zweite Wellenlänge (λ₂) im Bereich von ca. 980 nm bis ca. 1030 nm liegt.

11. Optisches System nach einem der Ansprüche 1 bis 5,
dadurch gekennzeichnet, daß an Stelle des Optisch-Elektrisch Wandlers (4) oder diesem vorausgehend eine auf die zweite Wellenlänge (λ₂) eingestellte optische Einrichtung vorhanden ist.

## Claims

1. An optical system comprising a fiber-optic amplifier having a section of optical fiber (1) doped with a rare-earth element and a pump-light source (2) for emitting pump light, the fiber-optic amplifier converting signal light of a first wavelength (λ₁), which is to be transmitted, to signal light of a second wavelength (λ₂), the optical system further comprising an optical-to-electrical transducer (4) for receiving the signal light of the second wavelength (λ₂),
**characterized in** that the signal light of the second wavelength (λ₂) is the pump light which is not absorbed in the section of optical fiber (1).

2. An optical system as claimed in claim 1,
characterized in that an optical filter (5) for blocking the signal light of the first wavelength (λ₁) is provided after the section of optical fiber (1) when viewed in the propagation direction of the signal light.

3. An optical system as claimed in claim 1
wherein the section of optical fiber (1) is doped with erbium ions, and wherein the first wavelength (λ₁) is approximately 1550 nm and the second wavelength is approximately 800 nm, approximately 980 nm, or approximately 514 nm.

4. An optical system as claimed in claim 1,
characterized in that the section of optical fiber (1) is doped with neodymium ions, and that the first wavelelenth (λ₁) is approximately 1300 nm and the second wavelength (λ₂) is approximately 850 nm.

5. An optical system as claimed in claim 1,
characterized in that the section of optical fiber (1) is doped with praseodymium ions, and that the first wavelength (λ₁) is approximately 1300 nm and the second wavelength (λ₂) lies in a range of approximately 980 nm to approximately 1030 nm.

6. Use of a fiber-optic amplifier having a section of optical fiber (1) doped with a rare-earth element and a pump-light source (2) emitting pump light as a wavelength converter which converts signal light of a first wavelength (λ₁), which is to be transmitted, to signal light of a second wavelength (λ₂),
**characterized in** that the signal light of the second wavelength (λ₂) is the pump light which is not absorbed in the section of optical fiber 11).

7. Use of a fiber-optic amplifier as claimed in claim 6, characterized in that an optical filter for blocking the signal light of the first wavelength (λ₁) is placed in the propagation path of the signal light behind the section of optical fiber (1) when viewed in the direction of propagation.

8. Use of a fiber-optic amplifier as claimed in claim 6
wherein the section of optical fiber (1) is doped with erbium ions, and wherein the first wavelength (λ₁) is approximately 1550 nm and the second wavelength is approximately 800 nm, approximately 980 nm or approximately 514 nm.

9. Use of a fiber-optic amplifier as claimed in claim 6, characterized in that the section of optical fiber (1) is doped with neodymium ions, and that the first wavelength (λ₁) is approximately 1300 nm and the second wavelength (λ₂) is approximately 850 nm.

10. Use of a fiber-optic amplifier as claimed in claim 6,
characterized in that the section of optical fiber (1) is doped with praseodymium ions, and that the first wavelength (λ₁) is approximately 1300 nm and the second wavelength (λ₂) lies in a range of approximately 980 nm to approximately 1030 nm.

11. An optical system as claimed in any one of claims 1 to 5, characterized in that in place or ahead of the optical-to-electrical transducer, an optical device sensitive to the second wavelength (λ₂) is provided.

## Revendications

1. Système optique à amplificateur à fibre optique composé d'un guide d'onde lumineuse (1) dopé avec un élément de terres rares, d'une source lumineuse de pompage (2) émettant une lumière de pompage, dans lequel l'amplificateur à fibre optique transforme le signal lumineux à transmettre d'une première longueur d'onde (λ1) en signal lumineux d'une deuxième longueur d'onde (λ2), ainsi qu'un convertisseur (4) électro-optique permettant de recevoir le signal lumineux de la deuxième longueur d'onde (λ2), caractérisé en ce que le signal lumineux de la deuxième longueur d'onde (λ2) correspond à la lumière de pompage non absorbée par le guide d'onde lumineuse (1).

2. Système optique selon la revendication 1, caractérisé en ce que, selon le sens d'élargissement du signal lumineux en direction du guide d'onde lumineuse (1), un filtre optique barrant le signal lumineux de la première longueur d'onde (λ1) est présent.

3. Système optique selon la revendication 1, sur lequel le guide d'ondes lumineuses (1) est dopé avec des ions d'erbium et la première longueur d'onde λ1 se situe dans la plage de 1550 nm et la deuxième longueur d'onde est d'environ 800 nm, d'environ 980 nm ou d'environ 514 nm.

4. Système optique selon la revendication 1, caractérisé en ce que le guide d'ondes lumineuses (1) est dopé avec des ions de néodyme et que la première longueur d'onde (λ1) se situe dans la plage de 1300 nm et que la deuxième longueur d'onde (λ2) est d'environ 850 nm.

5. Système optique selon la revendication 1, caractérisé en ce que le guide d'ondes lumineuses (1) dopé avec des ions au praséodyme et que la première longueur d'onde (λ1) se situe dans la plage de 1300 nm et que la deuxième longueur d'onde (λ2) se situe dans la plage d'environ 980 nm à environ 1030 nm.

6. Utilisation d'un amplificateur à fibre optique, possédant un guide d'ondes lumineuses (1) dopé avec un élément de terres rares et une source de lumière de pompage (2) qui émet de la lumière de pompage, en tant que convertisseur de longueur d'onde, qui convertit de la lumière de signal à transmettre d'une première longueur d'onde (λ1) en lumière de signal d'une deuxième longueur d'onde (λ2), caractérisée en ce que la lumière de signal de la deuxième longueur d'onde (λ2) est la lumière de pompage non absorbée dans le guide d'ondes lumineuses (1).

7. Utilisation d'un amplificateur à fibre optique selon la revendication 6, caractérisé en ce que, selon le sens d'élargissement en direction du guide d'onde lumineuse (1), un filtre optique, barrant le signal lumineux de la première longueur d'onde (λ1), est placé sur la voie d'élargissement du signal lumineux.

8. Utilisation d'un amplificateur à fibre optique selon la revendication 6, dans laquelle le guide d'onde lumineuse (1) est dopé avec des ions d'erbium, la première longueur d'onde (11) étant située autour des 1550 nm et la deuxième longueur d'onde (λ2) étant d'environ 800, 980 ou 514 nm.

9. Utilisation d'un amplificateur à fibre optique selon la revendication 6, caractérisé en ce que le guide d'onde lumineuse est dopé avec des ions de néodyme, la première longueur d'onde (λ1) étant située autour de 1300 nm et la deuxième longueur d'onde (λ2) étant d'environ 850 nm.

10. Utilisation d'un amplificateur à fibre optique selon la revendication 6, caractérisé en ce que le guide d'onde lumineuse (1) est dopé avec des ions de praséodyme, la première longueur d'onde (λ1) étant située autour de 1300 nm et la deuxième longueur d'onde (λ2) entre 980 et 1030 nm environ.

11. Système optique selon l'une des revendications 1 à 5, caractérisé en ce que, à la place du convertisseur électro-optique (4) ou précédant celui-ci, un équipement optique réglé sur la deuxième longueur d'onde (λ2) est présent.
